# DEMANDE DE BREVET EUROPEEN

(11) **EP 4 480 655 A1**
(43) Date de publication de la demande: **25.12.2024**
(21) Numéro de dépôt: 24182732.8
(22) Date de dépôt: 18.06.2024
(51) Int. Cl.: B27M 1/02, B44C 1/26, B44C 1/28, B44C 3/12, B27D 1/08, B27N 3/08, B27N 3/14, B27N 3/18, B27N 3/20, B27N 5/00

(54) **PROCÉDÉ D'ASSEMBLAGE PAR PRESSAGE**

(30) Priorité: 19.06.2023 CH 6612023
(71) Demandeur: Creaholic SA, 2503 Biel/Bienne (CH)
(72) Inventeur: Torriani, Laurent, 2516 Lamboing (CH); Bonadei, Antoine, 2503 Biel/Bienne (CH)
(74) Mandataire: P&TS SA (AG, Ltd.)

(57) **Abrégé**

La présente invention concerne un procédé d'assemblage d'un premier élément (3) composé d'un substrat ligneux avec un second élément (4) de manière à former un objet composite monolithique (5) comprenant les étapes de :

placer le premier élément (3) dans un moule de pressage (1);

assembler le second élément (4) au premier élément (3) par pressage du second élément contre le premier élément selon une direction de pressage (20); le substrat ligneux comprenant des fibres (30) ayant une résistance à la compression F1 selon ladite direction de pressage, le second élément (4) ayant une résistance à la compression F2 selon la direction de pressage (20), caractérisé en ce que :

les fibres (30) du substrat ligneux sont parallèles à la direction de pressage (20); et en ce que

la résistance à la compression F1 du premier élément (3) est strictement inférieure à la résistance à la compression F2 du second élément (4).

La présente invention concerne également un objet composite monolithique (5) comprenant un premier élément (3) composé d'un substrat ligneux comprenant des fibres (30) et un second élément (4) enchâssé dans le premier élément (3) selon une direction d'enchâssement, la direction d'enchâssement étant parallèle aux fibres du substrat ligneux.

## Description

### Domaine technique

La présente invention concerne un procédé d'assemblage par pressage ainsi qu'un objet issu d'un assemblage par pressage.

### Etat de la technique

De nombreuses techniques d'assemblage consistant à former un objet composite par pressage d'un premier élément avec un second élément sont connues dans l'art antérieur. Ces techniques permettent notamment de décorer le premier élément à l'aide du second, d'apporter une fonctionnalité particulière tel qu'un moyen de fixation, fonction électronique (capteur, élément intelligent/connecté, etc.), de renforcer une surface par insertion d'un élément résistant, etc.

Le bois, et plus généralement les matériaux composés de fibres parallèles, sont adaptés pour ce genre d'assemblage par pressage grâce à la facilité de déformation des fibres lorsqu'elles sont compressées selon une direction perpendiculaire aux fibres.

Cependant, ces assemblages requièrent généralement de recourir à des colles et/ou à des traitements préalables des matériaux utilisés tels que chauffage, trempage, usinage, micro-usinage, étampage par aiguille, etc. Les objets résultants contiennent ainsi souvent des produits chimiques (colles, résines, etc.) ce qui rend leur recyclage complexe voire irréalisable.

Cependant, la compression d'un matériau fibreux, notamment du bois, dans une direction perpendiculaire aux fibres a tendance à écraser les fibres sur les contours de la zone de compression, ce qui conduit par exemple à l'obtention de portions inesthétiques sur l'objet résultant ou à des fentes dans le matériau.

Par ailleurs, les matériaux fibreux compressés perpendiculairement au sens de leurs fibres tendent à retrouver au moins partiellement leur forme d'avant compression au fil du temps, notamment lorsque l'objet résultant est soumis à un environnement humide.

### Bref résumé de l'invention

Un but de l'invention est de proposer un procédé d'assemblage par pressage exempt des limitations des procédés connus dans l'art antérieur.

Un autre but de l'invention est de proposer un procédé d'assemblage par pressage ne nécessitant pas de pré-conditionnement des matériaux assemblés.

Un autre but de l'invention est de proposer un procédé d'assemblage par pressage ne nécessitant aucun moyen de fixation externe.

Ces buts sont atteints notamment au moyen d'un procédé d'assemblage d'un premier élément comprenant un substrat ligneux avec un second élément de manière à former un objet composite monolithique comprenant les étapes de :
placer le premier élément dans un moule de pressage ;
assembler le second élément au premier élément par pressage du second élément contre le premier élément selon une direction de pressage ; le substrat ligneux comprenant des fibres ayant une résistance à la compression F1 selon ladite direction de pressage, le second élément ayant une résistance à la compression F2 selon la direction de pressage, caractérisé en ce que :
les fibres du substrat ligneux sont parallèles à la direction de pressage ; et en ce que
la résistance à la compression F1 du premier élément est strictement inférieure à la résistance à la compression F2 du second élément.

Selon un mode de réalisation, la résistance à la compression du substrat ligneux du premier élément F1 est comprise entre 20N/mm² et 100N/mm².

Selon un mode de réalisation, la résistance à la compression F2 du second élément vérifie F2 > 50N/mm².

Selon un mode de réalisation, la résistance à la compression F2 du second élément vérifie F2 > F1 + 50N/mm².

Selon un mode de réalisation, la résistance à la compression F2 du second élément vérifie F2 > 2xF1.

Selon un mode de réalisation, le pressage est effectué à froid et/ou à sec.

Selon un mode de réalisation, l'assemblage du premier et du second élément est réalisé sans colle.

Selon un mode de réalisation, le second élément est réalisé dans un alliage métallique, un métal pur, une essence de bois, une pierre, une pierre précieuse, un matériau à base de terre cuite, un matériau fibreux, une céramique et/ou un polymère.

Selon un mode de réalisation, le premier élément est une pièce de bois et le second élément étant un charnon de charnière.

Selon un mode de réalisation, le second élément est une grille métallique destiné à renforcer le premier élément après pressage.

Selon un mode de réalisation, le premier élément est un manche et le second élément étant une âme métallique d'un manche d'outil ou de couteau.

Selon un mode de réalisation, une surface du second élément en contact avec le premier élément lors du pressage comprend au moins un coin destiné à pénétrer dans le premier élément lors du pressage de manière à écarter radialement les fibres du substrat ligneux.

Ces buts sont également atteints au moyen d'un objet composite monolithique comprenant :
un premier élément comprenant un substrat ligneux comprenant des fibres; et
un second élément enchâssé dans le premier élément selon une direction d'enchâssement,
les fibres ayant une résistance à la compression F1 selon la direction d'enchâssement, le second élément ayant une résistance à la compression F2,
caractérisé en ce que
la direction d'enchâssement est parallèle aux fibres du substrat ligneux; et en ce que
la résistance à la compression F1 du premier élément est strictement inférieure à la résistance à la compression F2 du second élément.

Selon un mode de réalisation, le second élément comprend un système de fixation permettant de fixer le premier élément à un troisième élément.

Selon un mode de réalisation, le premier élément est une pièce de bois et le système de fixation étant une charnière et/ou un clip.

Selon un mode de réalisation, le second élément comprend une grille métallique destiné à renforcer le premier élément après pressage.

Selon un mode de réalisation, le premier élément est un manche et le second élément comprend une âme métallique d'un manche d'outil ou de couteau.

Selon un mode de réalisation, le premier élément est une pièce de bois et le second élément comprend un module électronique.

Selon un mode de réalisation, le second élément comprend une plaque de transfert permettant l'assemblage de matériaux non collables.

### Brève description des figures

Des exemples de mise en oeuvre de l'invention sont indiqués dans la description illustrée par les figures annexées dans lesquelles :
- La figure 1 illustre la phase initiale du procédé de la présente invention durant laquelle un premier élément fibreux est disposé dans un moule de pressage.
- La figure 2 illustre une étape de pressage durant laquelle un second élément est assemblé au premier élément par pressage.
- La figure 3 illustre un objet composite résultant de l'assemblage par pressage du premier élément au second élément.
- La figure 4 illustre la présence de coins de rivetage sur le second élément avant pressage.
- Les figures 5a et 5b illustrent respectivement une charnière ouverte et une charnière fermée, l'assemblage des battants avec leur platine de charnière ayant été réalisé par le procédé de la présente invention.
- La figure 6 illustre un objet dont la surface a été renforcée par assemblage d'une grille métallique, l'assemblage ayant été réalisé par le procédé de la présente invention.

### Exemple(s) de mode de réalisation de l'invention

La présente invention concerne un procédé d'assemblage par pressage d'un premier élément 3 comprenant ou composé d'un substrat ligneux avec un second élément 4 de manière à former un objet composite monolithique.

Dans ce contexte, l'expression « substrat ligneux » désigne un matériau possédant les propriétés physiques liées aux fibres du bois. Plus particulièrement, cela signifie que le matériau en question possède une structure fibreuse dont les fibres sont essentiellement parallèles les unes aux autres et permettent le maintien mécanique du matériau.

Le terme « monolithique » signifie ici que le premier et le second élément sont assemblés de manière solidaire et ne sont pas mobiles l'un par rapport à l'autre une fois que le pressage est effectué. Le premier et le second élément ne peuvent ainsi pas être désolidarisés sans atteindre à l'intégrité de l'objet. De manière générale, l'objet monolithique issu de l'assemblage du premier et du second élément ne peut pas être assemblé et désassemblé à l'envi. Tout au plus un désassemblage unique peut être envisagé à des fins de recyclage des matériaux.

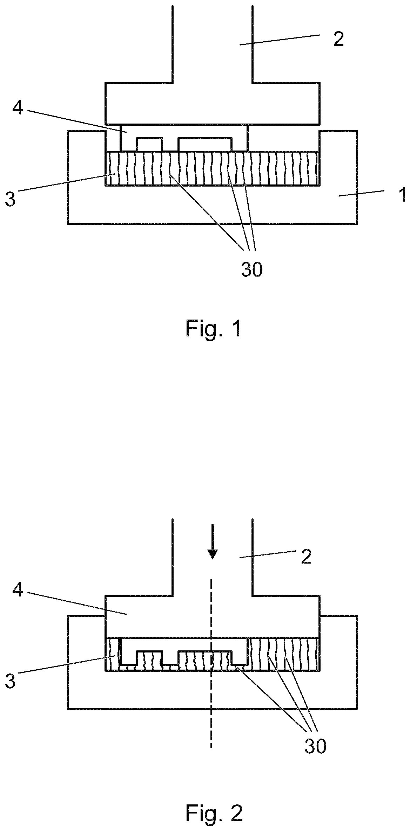

Comme illustré sur la figure 1, la première étape du procédé comprend le placement du premier élément 3 dans un moule de pressage 1. La fonction de ce moule de pressage 1 est notamment d'assurer le maintien du premier élément 3 durant le pressage afin d'éviter un mouvement relatif du premier élément 3 par rapport au second élément 4 ou par rapport à la presse 2.

Le premier élément 3 est placé dans le moule de pressage 1 de manière à ce que les fibres du substrat ligneux coïncide avec la direction de pressage de la presse 2. Cette orientation des fibres du substrat ligneux permet notamment de ne pas devoir recourir à des méthodes de pré-conditionnement du premier élément 3 telles que son élévation en température, son trempage dans l'eau (à des fins de gonflement) ou dans un bain de résine (e.g. résine durcissable). Il n'est pas non plus nécessaire par exemple de pré-usiner le premier élément.

Il résulte également de cette orientation des fibres du substrat ligneux que l'objet composite final est plus résistant, c'est-à-dire que les liens mécaniques entre le premier élément et le second élément ne nécessitent pas l'adjonction de moyens de fixation telle que de la colle, des vis, des tenon-mortaises, etc.

Un tel mode d'assemblage permet ainsi notamment un recyclage facilité à la fin de la vie de l'objet puisque les deux matériaux utilisés ne nécessitent pas de traitement chimiques incompatibles avec un recyclage ou d'éléments de fixation externes devant être retirés avant recyclage.

La cohésion du premier élément 3 avec le second élément 4 est ainsi uniquement assurée par la pression interne latérale exercée par les fibres du substrat contre les portions du second élément insérées dans le premier et par la friction des fibres du substrat contre le second. Il est avantageux d'avoir une géométrie permettant d'optimiser cette friction.

La second étape du procédé illustrée sur la figure 2 comprend l'assemblage du premier élément 3 au second élément 4 par l'exercice d'une force de pression selon une direction de pressage 20. Sous l'effet de la force de pression exercée par la presse 2, le second élément 4 est inséré dans le premier élément 3.

Dû à leur orientation, les fibres du substrat ligneux sont ainsi compressées selon leur direction longitudinale. La force de pression nécessaire pour compresser les fibres du substrat longitudinalement est généralement beaucoup plus importante que celle nécessaire pour les compresser transversalement.

Les fibres du substrat ligneux possèdent une résistance à la compression F1 dans la direction de pressage strictement inférieure à la résistance à la compression F2 dans la direction de pressage du second élément 4.

La résistance à la compression d'un matériau dans une direction donnée désigne sa capacité à supporter les charges qui tendent à réduire sa taille par compression (écrasement) dans cette direction. Cette résistance s'exprime généralement en N par unité de surface, typiquement N/m² ou N/mm² lorsque les surfaces considérées sont relativement faibles.

Ainsi, le second élément 4 est naturellement plus résistant à la compression que le premier élément 3, ce qui permet son insertion dans le premier élément sous l'effet de la presse.

Avantageusement, la différence entre les deux résistances à la compression F1 et F2 est importante de manière à éviter autant que possible que le second élément ne se déforme durant la compression.

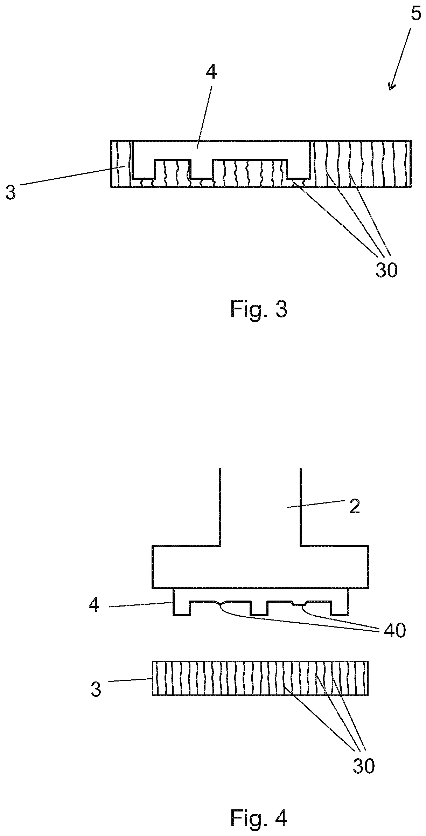

Comme illustré sur la figure 3, l'objet 5 issu de l'assemblage du premier et du second élément est composite dans le sens où il est formé d'éléments dans plusieurs matériaux différents, et monolithique dans le sens précisé ci-dessus.

Les fibres du substrat ligneux sont plus compressées aux endroits où le second élément 4 est le plus épais.

Selon un mode de réalisation, la résistance à la compression F1 du substrat ligneux du premier élément 3 est comprise entre 20N/mm² et 100N/mm². Cela inclut notamment la plupart des essences de bois telles que : le noyer (F1=65N/mm² ± 5N/mm²), le châtaignier, l'okoumé, l'arolle, le tilleul, l'aulne (F1=50N/mm² ± 5N/mm²), le peuplier (F1=405N/mm² ± 5N/mm²), le balsa (environ F1=20N/mm²), l'épicéa (F1=45N/mm² ± 5N/mm²), le sapin, l'érable, ou le hêtre (F1=60N/mm² ± 5N/mm²).

Selon un mode de réalisation, la résistance à la compression F2 du second élément vérifie F2 > 50N/mm². Ainsi, le second élément peut être par exemple une autre essence de bois ou dans un autre matériau ayant une résistance à la compression supérieure à 50N/mm².

Pour certains matériaux, il peut être important que l'écart de résistance à la compression soit relativement important. Ainsi, selon un mode de réalisation, la résistance à la compression du second élément F2 vérifiant F2 > F1 + 50N/mm². Cela peut être le cas par exemple lorsque le premier et le second élément sont deux essences de bois.

Selon un mode de réalisation, la résistance à la compression F2 du second élément 4 est supérieure au double de la résistance à la compression F1 du substrat ligneux du premier élément 3, c'est-à-dire qu'elle vérifie F2 > 2xF1.

Des exemples de matériaux formant le second élément incluent notamment tous types d'alliages métalliques, des métaux purs, tous types d'essences de bois, des pierres, des pierres précieuses, des matériaux à base de terre cuite, des céramiques, des coquillages, de la nacre ou encore tous types de polymères.

Le choix du matériau du second élément dépend notamment de la fonction visée de l'objet (décoration, renforcement, etc.) ainsi que de contraintes physiques telles que la résistance à la compression.

Comme évoqué plus haut, le présent procédé ne requiert au préalable ni élévation en température ni trempage du premier et/ou du second élément. Ainsi, selon un mode de réalisation, le procédé est effectué à froid et/ou à sec.

De manière similaire, l'assemblage du premier au second élément ne requiert aucun collage, et plus généralement aucun moyen de fixation extérieur pour que l'objet composite résultant soit monolithique et fonctionnel. Ainsi, selon un mode de réalisation, le procédé est réalisé sans colle.

De manière préférentielle, l'épaisseur du second élément 4, c'est-à-dire la dimension du second élément selon la direction de pressage 20 est comparativement peu importante par rapport à l'épaisseur du premier élément 3. Typiquement, l'épaisseur du second élément 4 n'excède pas 30% de l'épaisseur du premier élément 3, préférentiellement 20% de l'épaisseur du premier élément 3.

Préférentiellement, la surface du second élément 4 mesurée dans un plan orthogonal à la direction de pressage 20 est plus importante que son épaisseur.

Selon un mode de réalisation illustré sur la figure 4, le second élément 4 peut comprendre des éléments de rivetage afin d'accroitre la cohésion après pressage. Il s'agit typiquement d'anneaux possédant une section conique faisant office de coins disposés sur la surface du second élément étant destinée à être en appui contre le premier élément durant le pressage. Ces coins permettent d'écarter les fibres du substrat ligneux et d'accroitre la force latérale exercée par les fibres du substrat ligneux sur les portions du second élément insérées dans le premier élément. Ces coins peuvent être par exemple des cônes complets et/ou des cônes tronqués.

Le champ d'application du présent procédé est très vaste et inclut notamment l'incrustation à titre décoratif (e.g. insertion de motifs) ou informatif (e.g. logo, marque, mot, etc.), le renforcement de surface (e.g. insertion d'un treillis métallique), l'assemblage d'éléments de fixation (e.g. charnière), l'assemblage d'outillage (e.g. manche et âme métallique), l'insertion de modules électroniques (e.g. capteurs).

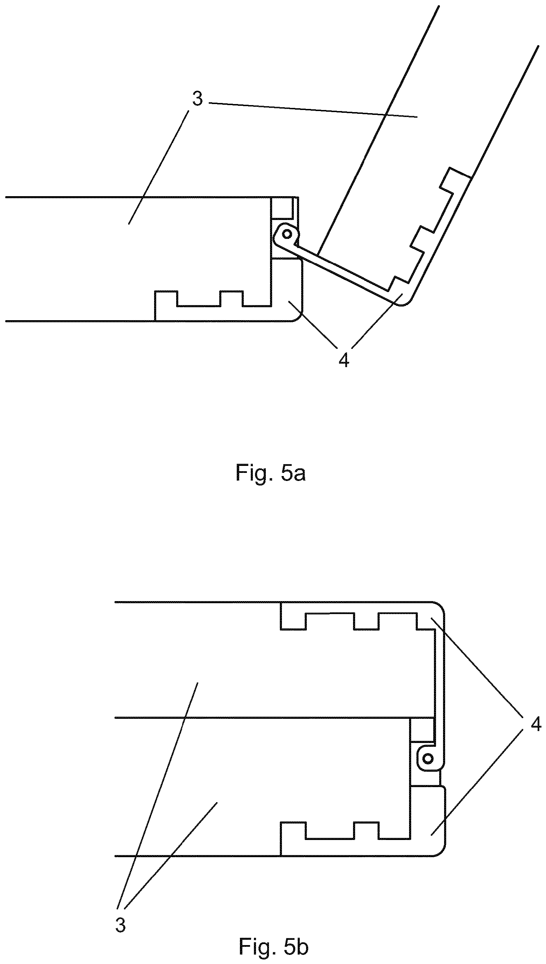

Selon un mode de réalisation illustré sur les figures 5a et 5b, le premier élément 3 peut comprendre un battant ou panneau de bois et le second élément 4 un charnon de charnière. Le procédé permet donc l'assemblage du charnon au battant. La figure 5a illustre un objet comprenant deux battants et une charnière en position ouverte. Chaque platine de charnière est assemblée à l'un des battants par pressage. La figure 5b illustre le même objet, la charnière étant en position fermée.

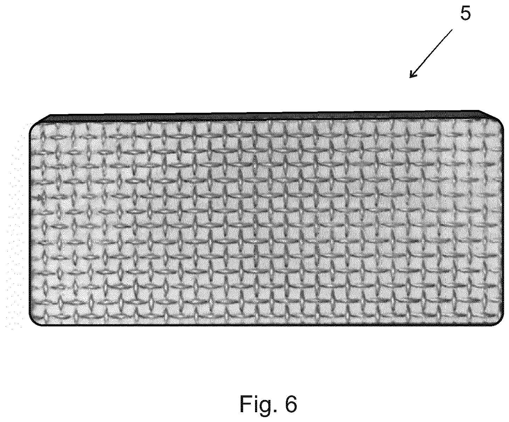

Comme illustré sur la figure 6, un premier élément 3 dans un matériau relativement peu résistant est assemblé à un second élément 4 comprenant une grille réalisée dans un matériau comparativement plus résistant de manière à renforcer une surface du premier élément.

Selon un mode de réalisation, le premier élément 3 peut comprendre un manche, typiquement en bois, et le second élément 4 une âme métallique d'outil ou de couteau. Le procédé permet ainsi l'assemblage de l'âme dans le manche de manière à produire un outil ou un couteau fonctionnel sans recourir à du rivetage ou du collage (résine époxy notamment) utilisés traditionnellement.

La présente invention concerne également un objet composite monolithique comprenant un premier élément composé d'un substrat ligneux comprenant des fibres et un second élément enchâssé dans le premier élément. L'enchâssement est réalisé selon une direction d'enchâssement parallèle aux fibres du substrat ligneux.

La résistance à la compression F1 des fibres du substrat ligneux dans la direction d'enchâssement est strictement inférieure à la résistance à la compression F2 du second élément.

Selon un mode de réalisation, le second élément 4 peut comprendre un élément de fixation permettant de fixer le premier élément 3 à un troisième élément. Comme illustré sur les figures 5a et 5b, le premier élément peut comprendre un battant en bois, le second élément une platine de charnière et le troisième élément un autre battant ou un élément non mobile sur lequel est fixé l'autre platine de charnière.

Alternativement, le système de fixation peut être un système de fixation par clip.

Comme évoqué ci-dessus et comme illustré sur la figure 6, l'objet peut comprendre un premier élément formé dans un matériau relativement peu résistant étant renforcé par un second élément dans un matériau comparativement plus résistant. Le second élément 4 peut être par exemple constitué d'une grille ou d'un treillis métallique.

Alternativement, le premier élément peut comprendre un manche d'outil ou de couteau, typiquement en bois, et le second élément peut être constitué de l'âme de l'outil ou du couteau. Le second élément peut être dans ce cas typiquement un alliage métallique, un métal pur, de la céramique, etc.

Selon un mode de réalisation, le premier élément 3 peut comprendre un plateau boisé et le second élément 4 peut comprendre un module électronique tel que par exemple un capteur, une antenne RFID ou encore un système anti-contrefaçon.

Selon un mode de réalisation, le second élément 4 peut comprendre une plaque de transfert ou connecteur permettant l'assemblage de matériaux non collables. Le second élément 4 peut alors servir d'interface de fixation entre le premier élément 3 et un troisième élément.

Une telle plaque de transfert permet par exemple de fixer un élément tel qu'un capteur ou un élément électronique par vissage ou par clipsage sur un support en bois. Cet élément peut ensuite être changé sans endommager le bois et/ou désassemblé pour permettre le recyclage des différents composants.

### Numéros de référence employés sur les figures

- 1: Moule de pressage
- 2: Presse
- 20: Direction de pressage
- 3: Premier élément
- 30: Fibres
- 4: Second élément
- 40: Coin de rivetage
- 5: Objet composite

## Revendications

1. Procédé d'assemblage d'un premier élément (3) comprenant un substrat ligneux avec un second élément (4) de manière à former un objet composite (5) monolithique comprenant les étapes de :
placer le premier élément dans un moule de pressage (1) ;
assembler le second élément (4) au premier élément (3) par pressage du second élément contre le premier élément (3) selon une direction de pressage (20) ; le substrat ligneux comprenant des fibres (30) ayant une résistance à la compression F1 selon ladite direction de pressage (20), le second élément (4) ayant une résistance à la compression F2 selon la direction de pressage (20),
**caractérisé en ce que** :
les fibres (30) du substrat ligneux sont parallèles à la direction de pressage (20) ; et **en ce que**
la résistance à la compression F1 du premier élément est strictement inférieure à la résistance à la compression F2 du second élément.

2. Procédé selon la revendication 1, la résistance à la compression F1 des fibres (30) du substrat ligneux du premier élément (3) étant comprise entre 20N/mm² et 100N/mm².

3. Procédé selon l'une des revendications précédentes, la résistance à la compression F2 du second élément (4) vérifiant F2 > 50N/mm².

4. Procédé selon l'une des revendications précédentes, la résistance à la compression F2 du second élément (4) vérifiant F2 > F1 + 50N/mm².

5. Procédé selon l'une des revendications précédentes, la résistance à la compression F2 du second élément (4) vérifiant F2 > 2xF1.

6. Procédé selon l'une des revendications précédentes, **caractérisée en ce que** le pressage est effectué à froid et/ou à sec.

7. Procédé selon l'une des revendications précédentes, l'assemblage du premier et du second élément (3,4) étant réalisé sans colle.

8. Procédé selon l'une des revendications précédentes, le second élément (4) est réalisé dans un alliage métallique, un métal pur, une essence de bois, une pierre, une pierre précieuse, un matériau à base de terre cuite, un matériau fibreux, une céramique et/ou un polymère

9. Procédé selon l'une des revendications 1 à 8 le premier élément (3) étant une pièce de bois et le second élément (4) étant un charnon de charnière.

10. Procédé selon l'une des revendications 1 à 8, le second élément (4) étant une grille métallique destiné à renforcer le premier élément (3) après pressage.

11. Procédé selon l'une des revendications 1 à 8, le premier élément (3) étant un manche et le second élément (4) étant une âme métallique d'un manche d'outil ou de couteau.

12. Procédé selon l'une des revendications précédentes, une surface du second élément (4) en contact avec le premier élément (3) lors du pressage comprenant au moins un coin destiné à pénétrer dans le premier élément (3) lors du pressage de manière à écarter radialement les fibres (30) du substrat ligneux.

13. Objet composite (5) monolithique comprenant :
un premier élément (3) comprenant un substrat ligneux comprenant des fibres (30); et
un second élément (4) enchâssé dans le premier élément (3) selon une direction d'enchâssement,
les fibres (30) ayant une résistance à la compression F1 selon la direction d'enchâssement, le second élément (4) ayant une résistance à la compression F2 selon la direction d'enchâssement,
**caractérisé en ce que**
la direction d'enchâssement est parallèle aux fibres (30) du substrat ligneux; et **en ce que**
la résistance à la compression F1 du premier élément (3) est strictement inférieure à la résistance à la compression F2 du second élément (4).

14. Objet selon la revendication 13, le second élément (4) comprenant un système de fixation permettant de fixer le premier élément (3) à un troisième élément.

15. Objet selon la revendication 14, le premier élément (3) étant une pièce de bois et le système de fixation étant une charnière et/ou un clip.
